# EUROPÄISCHE PATENTSCHRIFT

(11) **EP 1 995 047 B1**
(45) Veröffentlichungstag und Bekanntmachung des Hinweises auf die Patenterteilung: **15.05.2013**
(21) Anmeldenummer: 08152576.8
(22) Anmeldetag: 11.03.2008
(51) Int. Cl.: B29D 30/16, B29D 30/30, B29D 30/60, B60C 11/14

(54) **Verfahren zur Herstellung eines Fahrzeugluftreifens und Fahrzeugluftreifen**
Method for manufacturing a pneumatic tyre for a vehicle and pneumatic tyre for a vehicle
Procédé de fabrication d'un pneu de véhicule et pneu de véhicule

(30) Priorität: 22.05.2007 DE 102007023726
(43) Veröffentlichungstag der Anmeldung: 26.11.2008
(73) Patentinhaber: Continental Reifen Deutschland GmbH, 30165 Hannover (DE)
(72) Erfinder: Frerichs, Udo, 30855 Langenhagen (DE)
(74) Vertreter: Finger, Karsten

(56) Entgegenhaltungen:
- EP-A- 0 794 049
- JP-A- 2000 043 158
- US-A- 5 361 819
- US-A1- 2004 055 682

## Beschreibung

Die Erfindung betrifft ein Verfahren zur Herstellung eines Fahrzeugluftreifens mit einem Laufstreifen aus einer Laufstreifencap und einer Laufstreifenbase, einer Karkasseinlage und einem Gürtelverband, wobei zumindest die Laufstreifencap auf einer Aufbautrommel durch Spulen von zumindest einem extrudierten Kautschukmischungsstreifen aufgebaut wird. Die Erfindung betrifft ferner einen Fahrzeugluftreifen mit einem Laufstreifen aus einer Laufstreifencap und einer Laufstreifenbase, einer Karkasseinlage und einem Gürtelverband, wobei die Laufstreifencap aus zumindest einem in Umfangsrichtung spiralig und überlappend gewickelten Mischungsstreifen besteht.

Es ist bekannt, die Laufstreifencap eines Laufstreifens eines Fahrzeugluftreifens durch überlappendes spiraliges Wickeln (Spulen) von vorzugsweise extrudierten Kautschukmischungsstreifen herzustellen. Ein Verfahren und ein Fahrzeugluftreifen der eingangs genannten Art sind aus der US-A-2004 00 55 682 bekannt, wobei hier der Mischungsstreifen aus einer Kurzfasern enthaltenden Kautschukmischung erstellt ist. Des Weiteren offenbart die EP-B-1 072 446 einen Reifen mit einem Laufstreifen mit in radialer Richtung orientierten Stapelfasern, welche aus einem nichtmetallischen anorganischen Material bestehen, wobei aus der mit den Stapelfasern vermischten Kautschukmischung durch Kalandrieren eine Mischungsbahn mit in Längsrichtung orientierten Fasern erstellt wird. Diese Mischungsbahn wird anschließend mehrfach gefaltet, sodass aus der gefalteten Bahn ein Laufstreifen erstellt werden kann, in welchem ein Großteil der Fasern in radialer Richtung orientiert ist. Laufstreifen mit in radialer Richtung orientierten Fasern weisen eine erhöhte Haftreibung zum Untergrund auf, insbesondere können derartige Laufstreifen einen wesentlich verbesserten Griff auf schneeigem oder eisigem Untergrund sicherstellen.

Aus der EP-A-0 794 049 ist ein Verfahren zum Wickeln mehrerer Materialstreifen bekannt, bei dem ein Materialstreifen auf einen Zuführteil gewickelt wird, der Materialstreifen vom Zuführteil abgezogen wird und in mehrere Streifen vorbestimmter Größe mittels einer Schneidvorrichtung geschnitten wird. Die derart gebildeten Streifen werden um einen Aufnahmeteil gewickelt. Aus der JP-A-2000 043158 ist es ebenfalls bekannt, einen Materialstreifen in zwei Mischungsstreifen längs zu teilen und die Teile an unterschiedlichen Positionen einer Aufbautrommel durch Spulen aufzubringen. Aus der US-A-5,361,819 ist es bekannt, einen für die Gürtelbandage vorgesehenen Mischungsstreifen in zwei ungleich breite Mischungsstreifen zu teilen, um an unterschiedlichen Positionen den einen und den anderen Streifen aufbringen zu können.

Der Erfindung liegt die Aufgabe zu Grunde, das Spulen von Laufstreifenteilen mit Mischungsstreifen variabler und rationeller als bisher gestalten zu können.

Gelöst wird die gestellte Aufgabe erfindungsgemäß dadurch, dass der Mischungsstreifen in zwei Mischungsstreifen längsgeteilt wird, vor dem Spulen auf zumindest eine der breiten Seiten zumindest einer der Mischungsstreifen Kurzfasem angeheftet werden und anschließend die Mischungsstreifen synchron an einer Position oder an verschiedenen Positionen der Aufbautrommel durch Spulen aufgebracht werden.

Die Erfindung gestattet es daher, einen durch Extrusion hergestellten Mischungsstreifen gleichsam zu verdoppeln, sodass die üblichen Taktzeiten des Spulens deutlich reduziert werden können, und auf einfache Weise in die Laufstreifencap Kurzfasern einzubringen.

Diese Maßnahme ist dann von besonderem Vorteil, wenn vor dem Zusammenfügen auf zumindest eine der breiten, durch Zusammenfügen in Anlage gebrachten Seiten Kurzfasern aufgebracht werden. Zwischen den zusammengefügten Mischungsstreifen haften die Kurzfasern besonders gut.

Das Aufbringen von Kurzfasem ist jedoch auch dann möglich, wenn die beiden Mischungsstreifen voneinander getrennt bleiben und getrennt gespult werden.

Von besonderem Vorteil ist es, wenn die Kurzfasern mit einer Vorzugsorientierung aufgebracht bzw. angeheftet werden. Auf diese Weise lassen sich gezielt bestimmte Eigenschaften des Laufstreifens beeinflussen. Grundsätzlich ist es auch möglich, die Kurzfasern ungeordnet anzuheften.

Es ist ferner günstig, wenn die Kurzfasern in einem automatisch ablaufenden Arbeitsgang auf den oder die Mischungsstreifen aufgebracht werden können. Eine solche Möglichkeit besteht beispielsweise dann, wenn die Kurzfasern aus einer Spenderkassette oder dergleichen abgegeben werden.

Wird für den in zwei Mischungsstreifen getrennten Mischungsstreifen eine Kautschukmischung verwendet, welche elektrisch nicht leitfähig ist, wie es beispielsweise bei der Verwendung von Silika als Füllstoff der Fall ist, so ist durch zusätzliche Maßnahmen sicherzustellen, dass sich der fertige Reifen im Betrieb elektrostatisch nicht auflädt. Hier ist die Erfindung besonders vorteilhaft, da vor dem Spulen der beiden Mischungsstreifen auf zumindest eine der breiten Seiten abschnitts- oder stellenweise eine elektrisch leitfähige Kautschukmischung in Form von Streifen, Kurzstegen und dergleichen appliziert werden kann.

Im Rahmen der Erfindung sind vor Allem Kurzfasern besonders gut geeignet, die eine Länge von 0,1 mm bis 5 mm und einen Durchmesser von 1 µm bis 100 µm aufweisen. Die Kurzfasern können als Stapelfasern oder als Einzelfasern verwendet werden und aus unterschiedlichen Materialien, insbesondere aus organischen und/oder anorganischen Materialien bestehen.

Der erfindungsgemäße Fahrzeugluftreifen ist dadurch gekennzeichnet, dass sich zwischen den Windungen des/der Mischungsstreifen(s) Kurzfasern entlang von in Umfangsrichtung umlaufenden Bahnen befinden.

Weitere Merkmale, Vorteile und Einzelheiten der Erfindung werden nun anhand der Zeichnung, die schematisch mehrere Ausführungsbeispiele darstellt, näher beschrieben. Dabei zeigen
Fig. 1 einen Teilschnitt durch den Laufstreifenbereich eines Rohreifens,
Fig. 2 ein Stadium einer Ausführungsvariante der Herstellung eines Laufstreifens, und
Fig. 3 eine Variante der Ausführungsform gemäß Fig. 2.

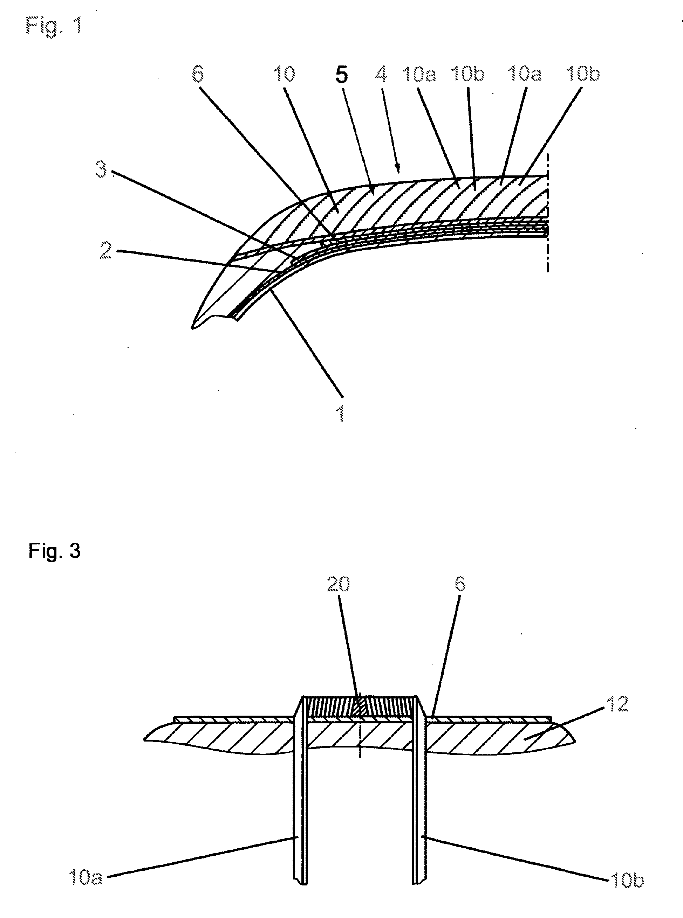

Fig. 1 zeigt schematisch einen Teilschnitt durch den Laufstreifenbereich eines noch unvulkanisierten Fahrzeugluftreifens in Radialbauart für PKW. Der Reifen weist eine Innenschicht 1, eine Radialkarkasse 2, einen Gürtelverband 3, welcher bei der dargestellten Ausführungsform aus zwei Gürtellagen besteht, und einen Laufstreifen 4 auf, welcher aus einer unmittelbar auf dem Gürtelverband 3 befindlichen Laufstreifenbase 6 und einer Laufstreifencap 5 besteht, welche aus unterschiedlichen Kautschukmischungen hergestellt sind. In die Laufstreifencap 5 wird bei der Vulkanisation des Rohreifens in einer Vulkanisationsform eine Profilierung aus Nuten, Rillen, Einschnitten und dergleichen eingeprägt.

Bei dem gezeigten Ausführungsbeispiel ist die Laufstreifencap 5 aus abwechselnd aneinanderliegenden Mischungsstreifen 10a, 10b aufgebaut. Die Laufstreifenbase 6 kann ebenfalls aus einem Kautschukmischungsstreifen oder als Monoteil erstellt sein. Die Kautschukmischungsstreifen 10a, 10b weisen jeweils eine Breite von vorzugsweise 10 mm bis 20 mm und eine Dicke von insbesondere bis zu 2 mm auf und werden durch spiraliges Wickeln (Spulen) auf einer Aufbautrommel bzw. Hilfstrommel 12 aufgebracht.

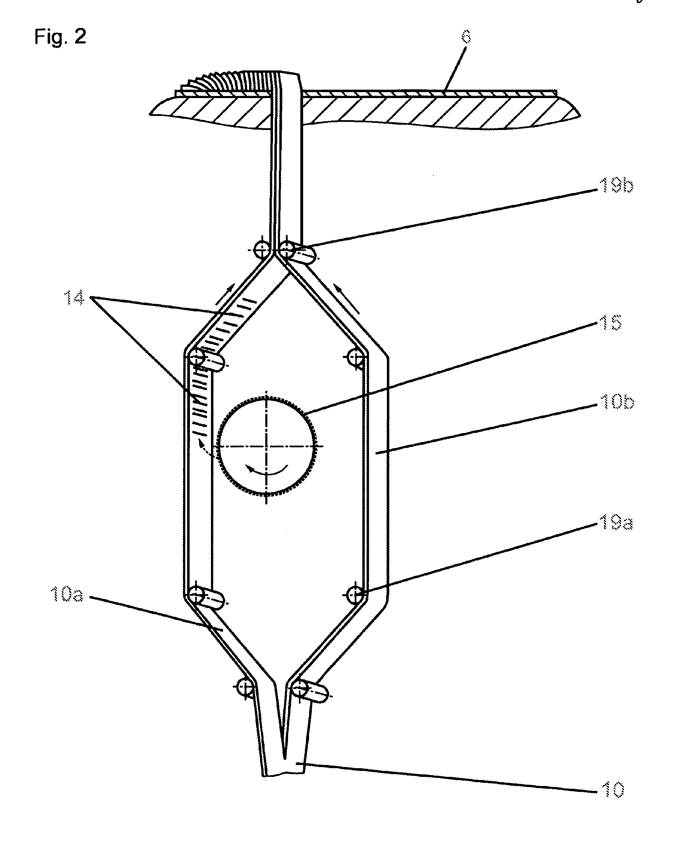

Die in Fig. 2 und Fig. 3 lediglich angedeutete Hilfstrommel 12 ist in bekannter, nicht gezeigter Weise segmentiert ausgeführt und wird beim Spulen der Mischungsstreifen 10a, 10b in Rotation versetzt. Die Segmente der Hilfstrommel 12 sind aus- und einfahrbar, sodass der Außendurchmesser der Hilfstrommel 12 vergrößert und verkleinert werden kann.

Bei den in Fig. 2 und Fig. 3 gezeigten Ausführungsformen wird vorerst ein Mischungsstreifen 10 extrudiert, welcher eine Breite aufweist, die der doppelten Breite der Mischungsstreifen 10a, 10b entspricht. Der breite Mischungsstreifen 10 wird in zwei übereinstimmende Mischungsstreifen 10a, 10b mittig längsgeteilt (geschnitten), wodurch die Streifen 10a, 10b nur noch halb so dick sind wie der Streifen 10. Die Mischungsstreifen 10a, 10b werden über Umlenkrollen 19a oder dergleichen auseinander gespreizt und anschließend mittels weiterer Umlenkrollen 19b wieder zusammengefügt. Dazwischen werden zumindest auf die breite Innenseite eines der beiden Mischungsstreifen 10a, 10b Kurzfasern 14, beispielsweise quer zur Längserstreckung der Streifen 10a, 10b orientiert, aufgebracht. Die Kurzfasern 14 werden von einer in Fig. 2 angedeuteten Spenderkassette 15 abgegeben, welche die Kurzfasern 14 ausgerichtet am Mischungsstreifen 10a anheftet. Die Eigenklebrigkeit des Mischungsstreifens 10a unterstützt die Haftung der Kurzfasern 14. Zusätzlich kann der Mischungsstreifen 10a vor dem Aufbringen der Kurzfasern 14 mit einer die Haftung erhöhenden Substanz bestrichen werden. Auf analoge Weise ist es möglich, die Kurzfasern 14 beliebig orientiert oder ungeordnet aufzubringen. Die wieder zusammengefügten Streifen 10a, 10b werden anschließend gemeinsam auf die bereits auf der Hilfstrommel 12 aufgebrachte Laufstreifenbasis 6 gespult. In der fertig gespulten Laufstreifencap befinden sich entsprechend orientierte oder unorientierte Kurzfasern 14 entlang von in Umfangsrichtung umlaufenden Bahnen.

Bei der in Fig. 3 gezeigten Ausführungsvariante werden die aus einem breiten extrudierten Mischungsstreifen (nicht gezeigt) durch Trennen gebildeten Mischungsstreifen 10a, 10b nicht wieder zusammengefügt, sondern bleiben voneinander getrennt und werden einzeln, aber synchron, gespult, um beispielsweise jeweils eine Laufstreifenhälfte aufzubauen. Auf einen oder auf beide Mischungsstreifen 10a, 10b können zumindest einseitig Kurzfasern aufgebracht werden. Fig. 3 zeigt ferner einen auf der Laufstreifenbase 6 positionierten, in Umfangsrichtung umlaufenden Mischungsstrang 20. Dieser besteht aus einer elektrisch leitfähigen Kautschukmischung und ist für den Fall gedacht, dass die Mischungsstreifen 10a, 10b aus einer Kautschukmischung gefertigt sind, welche als Füllstoff Kieselsäure und keinen bzw. keinen nennenswerten Anteil an Ruß enthält und somit elektrisch nicht leitfähig ist. Im fertigen Reifen stellt der Strang 20 eine in Umfangsrichtung umlaufende elektrisch leitfähige Passage zwischen der Laufstreifenbase 6 und der Außenseite der Laufstreifencap 5 zur Verfügung, sodass eine elektrostatische Aufladung des Reifens vermieden ist.

Bei beiden Ausführungsformen ist es für den Fall der Verwendung von Kieselsäure enthaltenden Mischungen möglich, auf zumindest einen der Mischungsstreifen 10a, 10b zumindest abschnitts- oder stellenweise eine elektrisch leitfähige Mischung in Form von Streifen, Stegen, kurzen Strängen und dergleichen aufzubringen.

Die eingesetzten Kurzfasern 14 können in Form von Faserbündeln oder als Einzelfasern vorliegen. Ihr Durchmesser beträgt zwischen 1 µm bis 100 µm, ihre durchschnittliche Länge zwischen 0,1 mm und 5 mm. Als Material für die Kurzfasern 14 kommen vor Allem organische und /oder anorganische Materialien in Frage, beispielsweise Aramide, Polyester, Rayon, sowie Hybridmaterialien aus diesen Materialien, ferner Kohlefasern oder Glasfasern.

Die Fasern können auf vielfältige Weise auf die Mischungsstreifen appliziert werden. Möglich ist beispielsweise ein Aufblasen der Fasern. Die Fasern können ferner unmittelbar vor dem Anheften von einem Faserstrang abgeschnitten werden. Die Fasern können auch bereits auf einer dünnen Folie positioniert sein, sodass die Folie auf den Mischungsstreifen doubliert wird.

### Bezugszeichenliste

- 1: Innenschicht
- 2: Karkasse
- 3: Gürtelverband
- 4: Laufstreifen
- 5: Cap
- 6: Base
- 10a: Mischungsstreifen
- 10b: Mischungsstreifen
- 12: Hilfstrommel
- 14: Kurzfasern
- 15: Spenderkassette
- 19a: Umlenkrollen
- 19b: Umlenkrollen
- 20: Mischungsstrang

## Patentansprüche

1. Verfahren zur Herstellung eines Fahrzeugluftreifens mit einem Laufstreifen (4) aus einer Laufstreifencap (5) und einer Laufstreifenbase (6), einer Karkasseinlage (2) und einem Gürtelverband (3), wobei zumindest die Laufstreifencap (5) auf einer Aufbautrommel (12) durch Spulen von zumindest einem extrudierten Kautschukmischungsstreifen (10a, 10b) aufgebaut wird,
**dadurch gekennzeichnet,**
**dass** der Mischungsstreifen (10) in zwei Mischungsstreifen (10a, 10b) längsgeteilt wird, vor dem Spulen auf zumindest eine der breiten Seiten zumindest einer der Mischungsstreifen (10a, 10b) Kurzfasern (14) angeheftet werden und anschließend die Mischungsstreifen (10a, 10b) synchron an einer Position oder an verschiedenen Positionen der Aufbautrommel (12) durch Spulen aufgebracht werden.

2. Verfahren nach Anspruch 1, **dadurch gekennzeichnet, dass** die Mischungsstreifen (10a, 10b) vor dem Spulen an breiten Seiten wieder zusammengefügt werden.

3. Verfahren nach Anspruch 1 oder 2, **dadurch gekennzeichnet, dass** die Kurzfasern (14) mit einer Vorzugsorientierung angeheftet werden.

4. Verfahren nach einem der Ansprüche 1 bis 3, **dadurch gekennzeichnet, dass** Kurzfasern (14) aus einer Spenderkassette (15) oder dergleichen abgegeben werden.

5. Verfahren nach einem der Ansprüche 1 bis 4, **dadurch gekennzeichnet, dass** die Kurzfasern (14) auf zumindest eine der einander zugewandten breiten Seiten der beiden Mischungsstreifen (10a, 10b) angeheftet werden.

6. Verfahren nach einem der Ansprüche 1 bis 5, **dadurch gekennzeichnet, dass** die Mischungsstreifen (10a, 10b) aus einer elektrisch nicht leitfähigen Kautschukmischung hergestellt werden und vor dem Spulen auf eine der breiten Seiten abschnitts- oder stellenweise eine elektrisch leitfähige Kautschukmischung in der Form von Streifen, Kurzstegen oder dergleichen appliziert wird.

7. Verfahren nach einem der Ansprüche 1 bis 6, **dadurch gekennzeichnet, dass** die Kurzfasern (14) eine Länge von 0,1 mm bis 5 mm und einen Durchmesser von 1 µm bis 100 µm aufweisen.

8. Verfahren nach einem der Ansprüche 1 bis 7, **dadurch gekennzeichnet, dass** die Kurzfasern (14) Stapelfasern oder Einzelfasem sind.

9. Verfahren nach einem der Ansprüche 1 bis 8, **dadurch gekennzeichnet, dass** die Kurzfasem (14) aus organischen und/oder anorganischen Materialien bestehen.

10. Fahrzeugluftreifen mit einem Laufstreifen (4) aus einer Laufstreifencap (5) und einer Laufstreifenbase (6), einer Karkasseinlage (2) und einem Gürtelverband (3), wobei die Laufstreifencap (5) aus zumindest einem in Umfangsrichtung spiralig und überlappend gewickelten Mischungsstreifen (10a, 10b) besteht,
**dadurch gekennzeichnet,**
**dass** sich zwischen den Windungen des/der Mischungsstreifen(s) (10a, 10b) Kurzfasern (14) entlang von in Umfangsrichtung umlaufenden Bahnen befinden.

## Claims

1. Method for manufacturing a pneumatic vehicle tyre with a tread rubber (4) comprising a tread cap (5) and a tread base (6), a carcass insert (2) and a breaker belt assembly (3), at least the tread cap (5) being built up on a building drum (12) by winding at least one extruded strip of rubber mixture (10a, 10b), **characterized in that** the strip of mixture (10) is divided longitudinally into two strips of mixture (10a, 10b), short fibres (14) are tacked onto at least one of the wide sides of at least one of the strips of mixture (10a, 10b) before the winding and the strips of mixture (10a, 10b) are subsequently applied by winding synchronously at one position or at different positions of the building drum (12).

2. Method according to Claim 1, **characterized in that** the strips of mixture (10a, 10b) are joined together again on wide sides before the winding.

3. Method according to Claim 1 or 2, **characterized in that** the short fibres (14) are tacked on with a preferential orientation.

4. Method according to one of Claims 1 to 3, **characterized in that** the short fibres (14) are delivered from a dispensing cartridge (15) or the like.

5. Method according to one of Claims 1 to 4, **characterized in that** the short fibres (14) are tacked onto at least one of the mutually facing wide sides of the two strips of mixture (10a, 10b).

6. Method according to one of Claims 1 to 5, **characterized in that** the strips of mixture (10a, 10b) are manufactured from an electrically nonconductive rubber mixture and an electrically conductive rubber mixture in the form of strips, short webs or the like is applied in certain portions or at certain points to one of the wide sides before the winding.

7. Method according to one of Claims 1 to 6, **characterized in that** the short fibres (14) have a length of 0.1 mm to 5 mm and a diameter of 1 µm to 100 µm.

8. Method according to one of Claims 1 to 7, **characterized in that** the short fibres (14) are staple fibres or single fibres.

9. Method according to one of Claims 1 to 8, **characterized in that** the short fibres (14) consist of organic and/or inorganic materials.

10. Pneumatic vehicle tyre with a tread rubber (4) comprising a tread cap (5) and a tread base (6), a carcass insert (2) and a breaker belt assembly (3), the tread cap (5) consisting of at least one strip of mixture (10a, 10b) wound spirally and overlapping in the circumferential direction, **characterized in that** between the turns of the strip(s) of mixture (10a, 10b) there are short fibres (14) along paths running around in the circumferential direction.

## Revendications

1. Procédé de fabrication d'un pneu de véhicule comprenant une bande de roulement (4) constituée d'un recouvrement de bande de roulement (5) et d'une base de bande de roulement (6), d'un insert de carcasse (2) et d'un ensemble de ceinture (3), au moins le recouvrement de bande de roulement (5) étant construit sur un tambour de construction (12) par enroulement d'au moins une bande de mélange de caoutchouc extrudée (10a, 10b),
**caractérisé en ce que**
la bande de mélange (10) est divisée longitudinalement en deux bandes de mélange (10a, 10b), des fibres courtes (14) sont brochées sur au moins l'un des côtés larges d'au moins l'une des bandes de mélange (10a, 10b) avant l'enroulement et ensuite les bandes de mélange (10a, 10b) sont appliquées par enroulement de manière synchrone en une position ou en différentes positions du tambour de construction (12).

2. Procédé selon la revendication 1, **caractérisé en ce que** les bandes de mélange (10a, 10b) sont à nouveau assemblées avant l'enroulement au niveau des côtés larges.

3. Procédé selon la revendication 1 ou 2, **caractérisé en ce que** les fibres courtes (14) sont brochées avec une orientation préférentielle.

4. Procédé selon l'une quelconque des revendications 1 à 3, **caractérisé en ce que** des fibres courtes (14) sont distribuées depuis une cassette de distribution (15) ou similaire.

5. Procédé selon l'une quelconque des revendications 1 à 4, **caractérisé en ce que** les fibres courtes (14) sont brochées sur au moins l'un des côtés larges tournés l'un vers l'autre des deux bandes de mélange (10a, 10b).

6. Procédé selon l'une quelconque des revendications 1 à 5, **caractérisé en ce que** les bandes de mélange (10a, 10b) sont fabriquées en un mélange de caoutchouc non conducteur de l'électricité, et avant l'enroulement un mélange de caoutchouc électriquement conducteur est appliqué sous forme de bandes, de courtes nervures ou similaires sur l'un des côtés larges par portions ou par zones.

7. Procédé selon l'une quelconque des revendications 1 à 6, **caractérisé en ce que** les fibres courtes (14) présentent une longueur de 0,1 mm à 5 mm et un diamètre de 1 µm à 100 µm.

8. Procédé selon l'une quelconque des revendications 1 à 7, **caractérisé en ce que** les fibres courtes (14) sont des fibres discontinues ou des fibres individuelles.

9. Procédé selon l'une quelconque des revendications 1 à 8, **caractérisé en ce que** les fibres courtes (14) se composent de matériaux organiques et/ou minéraux.

10. Pneu de véhicule comprenant une bande de roulement (4) constituée d'un recouvrement de bande de roulement (5) et d'une base de bande de roulement (6), d'un insert de carcasse (2) et d'un ensemble de ceinture (3), le recouvrement de bande de roulement (5) étant constitué d'au moins une bande de mélange (10a, 10b) enroulée dans la direction périphérique en spirale et en se chevauchant.
**caractérisé en ce**
**qu'**entre les enroulements du ou des bandes de mélange (10a, 10b) se trouvent des fibres courtes (4) le long de voies s'étendant sur le pourtour dans la direction périphérique.
